# EUROPÄISCHE PATENTSCHRIFT

(11) **EP 2 094 618 B1**
(45) Veröffentlichungstag und Bekanntmachung des Hinweises auf die Patenterteilung: **23.01.2019**
(21) Anmeldenummer: 07822744.4
(22) Anmeldetag: 20.11.2007
(51) Int. Cl.: C03C 17/30, C03C 27/04, C08J 7/04, C09D 4/00, C09D 5/00, C09D 183/08, C09J 5/02

(54) **TIEFTEMPERATUR-HAFTVORANSTRICH-ZUSAMMENSETZUNG**
LOW TEMPERATURE PRIMER COATING COMPOSITION
COMPOSITION COUCHE D'APPRÊT ADHÉSIVE À BASSE TEMPÉRATURE

(30) Priorität: 20.11.2006 EP 06124398
(43) Veröffentlichungstag der Anmeldung: 02.09.2009
(73) Patentinhaber: Sika Technology AG, 6340 Baar (CH)
(72) Erfinder: DOHNER, Reto, 8005 Zürich (CH); HUCK, Wolf-Rüdiger, 8044 Zürich (CH)
(74) Vertreter: Sika Patent Attorneys
(86) Internationale Anmeldenummer: PCT/EP2007/062569
(87) Internationale Veröffentlichungsnummer: WO 2008/061981

(56) Entgegenhaltungen:
- WO-A-2005/059056
- JP-A- 61 247 777
- JP-A- 2002 003 781
- US-A- 4 233 428
- "Primer compsn. for adhering urethane rubber - comprises amino:alkyl:alkoxy:silane, tetra-alkyl:titanate, and alkoxy gp.-contg. polysiloxane" DERWENT, 1989, XP002325258

## Beschreibung

### Technisches Gebiet

Die vorliegende Erfindung betrifft das Gebiet der Haftvoranstrich-Zusammensetzungen, sowie deren Anwendungen.

### Stand der Technik

Haftvoranstrich-Zusammensetzungen sind bekannt. Derartige Zusammensetzungen werden verwendet, um die Haftung einer Beschichtung, eines Kleb- oder Dichtstoffes auf verschiedenen Substraten zu ermöglichen, beziehungsweise zu verbessern.

Eine grosse Anzahl von Haftvoranstrich-Zusammensetzungen wurde entwickelt, um die Haftung auf Glas, insbesondere auf Glaskeramik, sowie auf Lack zu verbessern. Diese Substrate sind insbesondere deshalb wichtig, weil sie in der Scheibenverklebung bei Transportmitteln, insbesondere bei Automobilen, vorhanden sind, und weil diese Verklebung eine sehr wichtige Klebeanwendung darstellt.

WO 2005/059056 A1 beschreibt Klarprimer (Clear Primer), welche Titanat, Mercaptosilan, Polyaminosilan, sekundäre Aminosilane und Lösungsmittel enthalten, und welche zu einer Haftverbesserung von Polyurethanklebstoffen auf Glas führen.

Die Verklebungen werden typischerweise bei einer Umgebungstemperatur von etwa 23°C erstellt. Sind kalte, d.h. kälter als 5°C, Substrate zu verkleben, werden diese üblicherweise vor dem Verkleben, bzw. vor dem Auftragen des Haftvoranstriches, auf etwa 23°C klimatisiert. Dies ist jedoch sehr umständlich und mit einigem Zeit- und Kostenaufwand verbunden. So wird beispielsweise ein Fahrzeug, bei welchem im Winter eine Scheibe ersetzt werden muss, in eine beheizte Garage transportiert. Dies ist in ländlichen Gegenden jedoch vielfach ein Transport über grosse Strecken. Weiterhin kann die Scheibe mit dem in der Garage applizierten Primer vorbereitet zum Fahrzeug transportiert werden. Hierfür ist jedoch gute Haftung des Klebstoffs auf der kalten Oberfläche des Fahrzeugsubstrats, bzw. des darauf applizierten Primers, und eine lange Offenzeit des Primers notwendig, was einerseits grosse Risiken einer mangelnden Haftung und/oder starke Einschränkungen der Flexibilität verursacht. Weiterhin besteht das grosse Problem, dass der voraus aufgetragene Primer bis zum Kontakt mit dem Klebstoff verschmutzt werden könnte und demzufolge mit zusätzlichem Aufwand speziell verpackt werden muss.

Deshalb sind seit einiger Zeit Bestrebungen im Gang, derartige Verklebungen im Winter auf der Strasse durchführen zu können. Es zeigte sich jedoch, dass in diesen Fällen, wo kalte Substrate, insbesondere bei Substrattemperaturen unter 5°C, vor allem von tiefer als 0°C oder gar tiefer als -5°C, verklebt wurden, stark verschlechterte Haftungen auch unter Benutzung von Haftvoranstrich-Zusammensetzungen auftreten.

### Darstellung der Erfindung

Aufgabe der vorliegenden Erfindung ist es daher, Haftvoranstrich-Zusammensetzungen zur Verfügung zu stellen, welche auch bei tiefen Temperaturen, d.h. bei Substrattemperaturen von weniger als 5°C, insbesondere von weniger als 0°C, zu einer guten Haftvermittlung insbesondere auf Glas und Glaskeramik führen.

Überraschenderweise wurde nun gefunden, dass spezifische Haftvoranstrich-Zusammensetzungen, wie sie Anspruch 1 beschrieben sind, für diesen Zweck verwendet werden können um die gestellte Aufgabe erfüllen zu können.

Neben einer guten Haftvermittlung bei Raumtemperatur konnte bei diesen Haftvoranstrich-Zusammensetzungen eine stark verbesserte Haftung sowohl auf Glas als auch Glaskeramiken bei Temperaturen unter 5°C, insbesondere zwischen 0°C und -10°C, bevorzugt zwischen -5°C und -15°C, festgestellt werden.

Dies erlaubt es, bei kalten Umgebungstemperaturen, wie sie im Winter häufig vorkommen, insbesondere Scheibenreparaturen auch ausserhalb von temperierten Räumen, zum Beispiel auf der Strasse, durchzuführen, ohne dass der Verklebungsbereich erwärmt werden müsste, wie zum Beispiel mittels mobilen Wärmestrahlern oder elektrischen Heizvorrichtungen. Dies ist aus Gründen der besseren Handhabung und Kosten ein besonders grosser Vorteil.

In einem weiteren Aspekt betrifft die Erfindung ein Verfahren zur Herstellung eines mit Haftvermittlervoranstrich-Zusammensetzung beschichteten Substrates gemäss Anspruch 13, sowie ein Verfahren zum Verkleben von zwei Substraten gemäss Anspruch 14 sowie die daraus resultierenden Artikel gemäss Anspruch 15. In einem weiteren Aspekt schliesslich betrifft die Erfindung ein Verfahren zur Reparatur einer Verglasung eines Transportmittels gemäss Anspruch 16.

Weitere besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt die Verwendung einer Haftvoranstrich-Zusammensetzung zum Erstellen eines Haftvoranstriches auf einem Substrat **S1** bei einer Substrat-Temperatur von tiefer als 5°C, insbesondere zwischen 0°C und -20°C, bevorzugt zwischen -5°C und -15°C.

Die Haftvoranstrich-Zusammensetzung enthält
- mindestens ein Mercaptosilan **MS** oder ein Addukt eines Mercaptosilans **MS,**
- sowie
   entweder mindestens ein Polysilan **PSA,** welches mindestens eine sekundäre oder tertiäre Aminogruppe aufweist,
   oder
   mindestens ein Polysilan **PS** und mindestens ein Aminosilan **AS,** welches mindestens eine sekundäre oder tertiäre Aminogruppe aufweist.

Unter "Silangruppe" wird im vorliegenden Dokument eine über ein Siliziumatom an einen organischen Rest gebundene Gruppe -SiX_{y}R_{(3-y)}, welche mindestens eine (y=1) bis drei (y=3) hydrolysierbare Reste oder OH (X) aufweist, und welche gegebenenfalls noch eine (y=2) oder zwei (y=1) Alkylgruppen R mit 1 bis 4 C-Atome aufweisen. Bei der Hydrolyse der Silangruppe, beispielsweise durch Kontakt mit Luftfeuchtigkeit, bilden sich Silanolgruppen (Si-OH-Gruppen) und, durch nachfolgende Kondensationsreaktionen der Silanolgruppen, Siloxangruppen (Si-O-Si-Gruppen). Als "hydrolysierbarer Rest" werden solche Reste an einer Silangruppe verstanden, welche durch Wasser in einer Hydrolysereaktion integral vom Siliziumatom verdrängt und dort formal durch eine Hydroxylgruppe ersetzt werden. Durch die Hydrolysereaktion wird der hydrolysierbare Rest zu einer niedermolekularen Verbindung protoniert, die organisch oder anorganisch sein kann.

Unter "Silan" wird im vorliegenden Dokument eine Organo-Siliziumverbindung verstanden, welche mindestens eine Silangruppe aufweist, insbesondere, welche mindestens eine an ein Siliziumatom gebundene Hydroxygruppe, Alkoxygruppe oder Acyloxygruppe sowie mindestens einen über eine Kohlenstoff-Silizium-Bindung an ein Siliziumatom gebundenen organischen Substituenten aufweist.

Unter "Polysilan" wird im vorliegenden Dokument ein Silan verstanden, welches im gleichen Molekül zwei oder mehrere Silangruppen aufweist.

Silane, welche Amino-, Mercapto-, beziehungsweise Oxiran-, Gruppen im ans Siliziumatom der Silangruppe gebundenen organischen Rest aufweisen, werden als "Aminosilane", "Mercaptosilane", beziehungsweise "Epoxysilane", bezeichnet. Ein sekundäres Aminosilan weist eine sekundäre Aminogruppe -NH- auf. Ein primäres Aminosilan weist eine primäre Aminogruppe -NH₂ auf. Ein tertiäres Aminosilan weist eine tertiäre Aminogruppe 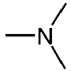 auf.

Mit "Poly" beginnende Substanznamen wie Polyol, Polyisocyanat, Polymercaptan oder Polyamin bezeichnen im vorliegenden Dokument Substanzen, die formal zwei oder mehr der in ihrem Namen vorkommenden funktionellen Gruppen pro Molekül enthalten.

Unter einem Addukt eines Mercaptosilans **MS** wird im vorliegenden Dokument das Reaktionsprodukt eines Mercaptosilanes mit einem Epoxid, Polyepoxid oder Polyisocyanat verstanden, bei welchem die Mercaptogruppe mit einer Epoxidgruppe oder Isocyanatgruppe reagiert.

Für die vorliegende Erfindung ist wesentlich, dass gleichzeitig eine sekundäre oder tertiäre Aminogruppe in einem Silan sowie ein Polysilan, d.h. eine Verbindung mit mehreren Silangruppen, vorhanden sind. In der ersten Ausführungsform ist das Polysilan ein Polysilan **PSA,** welches mindestens eine sekundäre oder tertiäre Aminogruppe aufweist, d.h. die erfindungswesentlichen Merkmale des Polysilans und des sekundären oder tertiären Aminosilans sind in demselben Molekül verwirklicht.

In der zweiten Ausführungsform sind die Merkmale Polysilan und sekundäres oder tertiäres Aminosilan durch zwei unterschiedliche Moleküle, nämlich das Polysilan **PS** und das Aminosilan **AS,** welches mindestens eine sekundäre oder tertiäre Aminogruppe aufweist, verwirklicht.

Als Polysilane **PSA,** welches mindestens eine sekundäre oder tertiäre Aminogruppe aufweist, sind insbesondere Aminosilan der Formel (I) geeignet

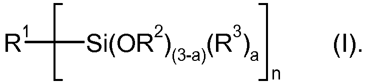

Hierbei steht R¹ für einen n-wertigen organischen Rest mit mindestens einer sekundären oder tertiären Aminogruppe. R² steht unabhängig voneinander für Wasserstoff oder für eine Alkylgruppe mit 1 bis 4 C-Atome oder eine Acylgruppe. Weiterhin steht R³ unabhängig voneinander für H oder für eine Alkylgruppe mit 1 bis 10 C-Atome und n steht für einen Wert von 2, 3 oder 4 steht. Besonders bevorzugt steht n für 2 oder drei, d.h. vorzugsweise weist das Polysilanes **PSA** zwei oder drei Silangruppen auf. Bevorzugt werden Polysilane **PSA** mit zwei Silangruppen.

Es werden Polysilane **PSA** mit a = 0 bevorzugt. Als R² werden Methyl, Ethyl, Propyl, Butyl sowie deren Stellungsisomere bevorzugt. Meist bevorzugt als R² ist Methyl.

In einer Ausführungsform werden als Polysilane **PSA,** welche mindestens eine sekundäre oder tertiäre Aminogruppe aufweisen, Aminosilane der Formel (II) bevorzugt.

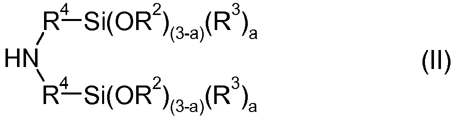

Hierbei steht R⁴ für eine lineare oder verzweigte Alkylengruppe mit 1 bis 6 C-Atomen, insbesondere für Propylen.

Als besonders bevorzugte Polysilane **PSA** gelten Bis(3-trimethoxysilylpropyl)amin und Bis(3-triethoxysilylpropyl)amin. Als meist bevorzugte Polysilan **PSA** in dieser Ausführungsform gilt Bis(3-trimethoxysilylpropyl)amin.

In einer weiteren Ausführungsform werden als Polysilane **PSA,** welche mindestens eine sekundäre oder tertiäre Aminogruppe aufweisen, Aminosilane bevorzugt, welche mindestens ein Strukturelement der Formel (III) oder (III'), insbesondere der Formel (III") oder (III'"), aufweisen.

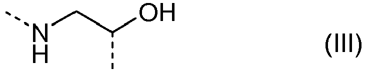

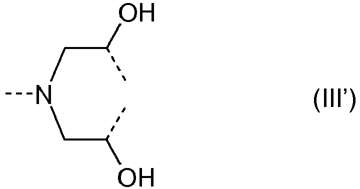

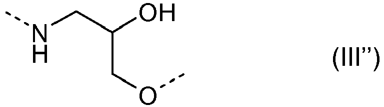

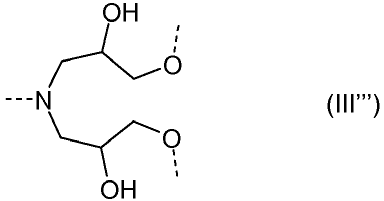

Derartige Polysilane **PSA** lassen sich über Reaktionen von primären oder sekundären Aminen mit Glycidylethern herstellen. Die Silangruppen können sowohl vom Amin oder vom Glycidylether stammen.

Derartige Reaktionsprodukte sind einerseits beispielsweise die Reaktionsprodukte aus 3-Aminopropyltrimethoxysilan oder Bis(3-trimethoxysilylpropyl)amin und Bisphenol-A-Diglycidylether oder Hexandiol-Diglycidylether.

Bespiele für derartige Polysilane **PSA,** welche mindestens eine sekundäre oder tertiäre Aminogruppe aufweisen, sind andererseits Reaktionsprodukte aus einem Epoxysilan der Formel (IV) mit einem Aminosilan der Formel (IV').

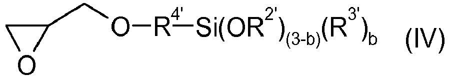

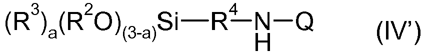

Hierbei steht R^{2'} unabhängig voneinander für Wasserstoff oder für eine Alkylgruppe mit 1 bis 4 C-Atome oder eine Acylgruppe mit 1 bis 4 C-Atome. Bevorzugt steht R²' für Methyl. R^{3'} steht unabhängig voneinander für H oder für eine Alkylgruppe mit 1 bis 10 C-Atome. R⁴ und R^{4'} stehen unabhängig voneinander je für eine lineare oder verzweigte Alkylengruppe mit 1 bis 6 C-Atomen, insbesondere für Propylen. Q steht für H, einen C₁-C₂₀- Alkyl-, Cycloalkyl- oder Arylrest oder einen Rest der Formel -(CH₂-CH₂-NH)_{d}H oder für einen Rest der Formel -R⁴-Si(OR²)₍₃₋ₐ₎(R³)ₐ. Die Indizes b und d stehen je für einen Wert von 0, 1 oder 2, bevorzugt für 0. R³, R² und a weisen die bereits für Formel (I) beschriebenen Bedeutungen auf.

Derartige Reaktionsprodukte können eine Struktur der Formel (IV") aufweisen.

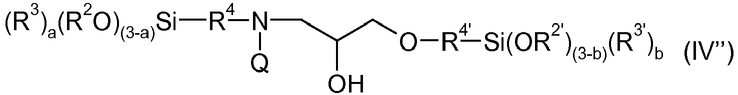

Besonders bevorzugt als Polysilan **PSA,** welches mindestens eine sekundäre oder tertiäre Aminogruppe aufweist, sind Reaktionsprodukte von 3-Aminopropyltrimethoxysilan oder Bis(3-trimethoxysilylpropyl)amin und 3-Glycidyloxypropyltrimethoxysilan.

Der Anteil des Polysilanes **PSA,** welches mindestens eine sekundäre oder tertiäre Aminogruppe aufweist, beträgt vorteilhaft 0.5 - 30 Gew.-%, insbesondere 1 - 15 Gew.-%, bevorzugt 1 - 10 Gew.-%, bezogen auf das Gewicht der Haftvoranstrich-Zusammensetzung.

Als Polysilan **PS** sind einerseits insbesondere Polysilane geeignet, welche sich aus der Reaktion eines Aminosilans oder Mercaptosilans mit einem Polyisocyanats oder mit einem Isocyanatgruppen aufweisenden Polyurethanprepolymeren erhalten werden können. Derartige Polysilane **PS** weisen insbesondere die Formel (IX) auf

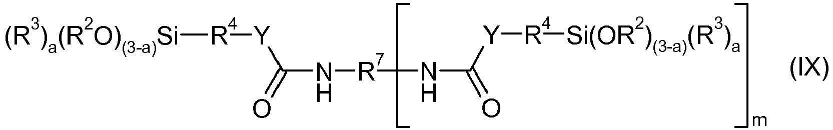

Hierbei steht Y für NH, NR⁸ oder S, wobei R⁸ für eine Alkyl- oder Arylgruppe, insbesondere mit 1 bis 10 C-Atomen, oder für einen Rest der Formel -R⁴-Si(OR²)₍₃₋ₐ₎(R³)ₐ steht. Weiterhin steht R⁷ für ein Polyisocyanat oder Isocyanatgruppen aufweisendes Polyurethanprepolymer nach Entfernung aller NCO-Gruppen und m für einen Wert von 1, 2 oder 3, insbesondere für 1 oder 2.

Als Aminosilane sind insbesondere Aminosilane mit primären Aminogruppen geeignet, wie beispielsweise 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan oder Aminomethylmethoxydimethylsilan. Bevorzugt sind 3-Aminopropyltrimethoxysilan und 3-Aminopropylmethyldimethoxysilan.

Als Aminosilane können, obwohl sie langsamer in der Reaktion sind, auch Aminosilane mit sekundären Aminogruppen, wie beispielsweise N-Butyl-3-Aminopropyltrimethoxysilan, N-Methyl-3-Aminopropyltrimethoxysilan, N-Phenyl-3-Aminopropyltrimethoxysilan oder Bis(3-trimethoxysilylpropyl)amin, verwendet werden.

Sekundäre Aminosilane sind gegenüber primären Aminosilanen bevorzugt, da sie zu einer besseren Löslichkeit der gebildeten Polysilane **PS** verfügen und weniger ausfallen.

Als Mercaptosilane sind insbesondere die weiter unten erwähnten Mercaptosilane **MS** geeignet.

Als Polyisocyanate sind insbesondere Diisocyanate oder Triisocyanate geeignet. Bevorzugt sind kommerziell erhältliche Polyisocyanate, wie beispielsweise 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), sowie beliebige Mischungen der vorgenannten Isocyanate und deren Biurete oder deren Isocyanurate. Besonders bevorzugt sind MDI, TDI, HDI und IPDI und deren Biurete oder Isocyanurate.

Isocyanatgruppen aufweisende Polyurethanprepolymere lassen sich insbesondere aus den gerade genannten Polyisocyanaten und den weiter unten genannten Polyolen und/oder Polyaminen nach bekannter Art und Weise erhalten.

Als Polysilan **PS** andererseits geeignet sind Additionsprodukte von Isocyanatosilanen mit Polyolen oder Polyaminen oder Polymercaptanen. Derartige Polysilane **PS** weisen insbesondere die Formel (X) oder (X') auf

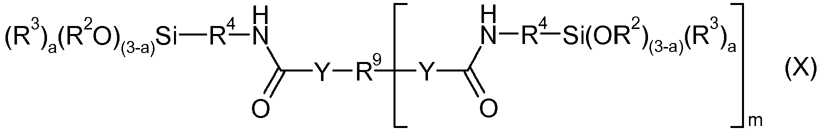

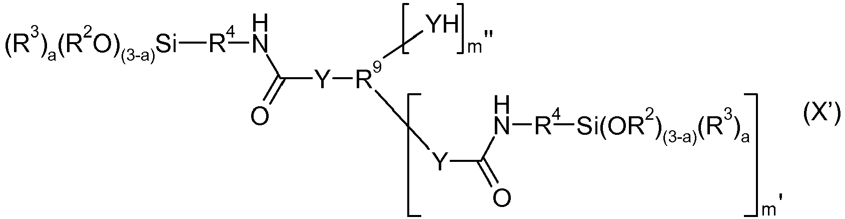

Hierbei steht Y für NH, NR⁸ oder S, wobei R⁸ für eine Alkyl- oder Arylgruppe, insbesondere mit 1 bis 10 C-Atomen, steht. Weiterhin steht R⁹ für ein Polyamin oder Polymercaptan nach Entfernung aller NCO-Gruppen und m für einen Wert von 1, 2 oder 3, insbesondere für 1 oder 2, und m' >0 und m"> 0, mit der Bedingung, dass die Summe von m' und m" für einen Wert von 1, 2 oder 3, insbesondere für 1 oder 2, steht. Das Polysilan **PS** der Formel (X') weist somit freie Gruppen YH auf, d.h. das Polyol oder Polyamin oder Polymercaptan wurde nicht vollständig mit den NCO-Gruppen umgesetzt.

Als Isocyanatosilane sind insbesondere 3-Isocynatopropyltrimethoxysilan und 3-Isocynatopropylmethyldimethoxysilan geeignet.

Als Polyamine sind insbesondere aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethyl-cyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 3,9-Bis-(3-aminopropyl)-2,4,8,10-tetraoxaspiro[5.5]undecan, 1,3- und 1,4-Xylylendiamin, Ethergruppenhaltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit zwei oder drei Aminogruppen, erhältlich beispielsweise unter dem Namen Jeffamine® (hergestellt von Huntsman Chemicals), aromatische Amine, wie beispielsweise 3,5-Diethyl-2,4(2,6)-diaminotoluol (Lonzacure DETDA®), 3,5-Dimethylthiotoluylendiamin (Ethacure 300®), 4,4'-Methylen-bis-(2,6-diethylanilin) (MDEA), 4,4'-Methylen-bis-(3-chlor-2,6-diethylanilin) (MCDEA), sowie Mischungen der vorgenannten Polyamine, geeignet.

Als Polymercaptane sind insbesondere Di- oder Trimercaptane, wie beispielsweise Trithioglycerin, geeignet.

Als Polyole sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 - 30'000 g/mol, sowie Polyoxypropylendiole und -triole mit einem Molekulargewicht von 400 - 8'000 g/mol.

Ebenfalls besonders geeignet sind sogenannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar® CTBN von Noveon) hergestellt werden können.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.
- niedrigmolekulare zwei- oder mehrwertige Alkohole, wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole.

Für alle Polysilan **PS** ist es vorteilhaft, wenn es ein Silanequivalentgewicht von nicht mehr als 500 g/eq, insbesondere von 400 - 100 g/eq, bevorzugt von 350 bis 200 g/eq. Als Silanequivalentgewicht des Polysilans **PS** wird hierbei das Molekulargewicht Mₙ des Polysilans **PS** dividiert durch die Anzahl der Silangruppen verstanden.

Das Polysilans **PS** weist vorzugsweise zwei bis vier, bevorzugt zwei, Silangruppen auf.

Als Aminosilan **AS,** welches mindestens eine sekundäre oder tertiäre Aminogruppe aufweist, sind insbesondere Aminosilane der Formel (V), (VI) oder (VII) geeignet.

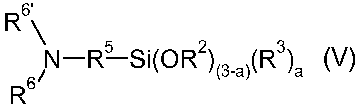

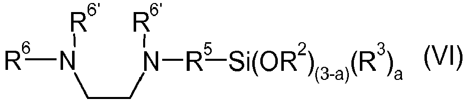

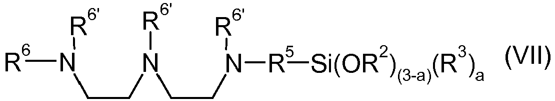

Hierbei steht R⁵ für eine lineare oder verzweigte Alkylengruppe mit 1 bis 6 C-Atomen, insbesondere für Propylen, R⁶ steht für eine Alkyl- oder Cycloalkylgruppe mit 1 bis 12 C-Atomen oder für eine Arylgruppe, R^{6'} steht für ein Wasserstoffatom oder für eine Alkyl- oder Cycloalkylgruppe mit 1 bis 12 C-Atomen oder für eine Arylgruppe. Bevorzugt steht R^{6'} für H.

Die Substituenten R² und R³ sowie der Index a weisen die bereits vorgängig erwähnten Bedeutungen auf.

Insbesondere handelt es sich beim Aminosilan **AS,** welches mindestens eine sekundäre oder tertiäre Aminogruppe aufweist, um ein Aminosilan, welches ausgewählt ist aus der Gruppe bestehend aus N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan; N-Ethyl-3-Aminopropyl-dimethoxy-methylsilan, N-Phenyl-4-Aminobutyl-trimethoxysilan, N-Phenylaminomethyl-dimethoxymethylsilan, N-Cyclohexyl-aminomethyl-dimethoxymethylsilan, N-Methyl-aminomethyl-dimethoxymethylsilan, N-Ethyl-aminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, N-(2-Aminoethyl)-3-aminopropyl-methyldimethoxysilan und 3-[2-(2-Aminoethylamino)-ethylamino]-propyl-methyldimethoxysilan.

Als Aminosilan **AS,** welches mindestens eine sekundäre oder tertiäre Aminogruppe aufweist, sind andererseits insbesondere Additionsprodukte von primären Aminen oder sekundären Aminen mit Epoxysilanen oder von primären oder sekundären Aminosilanen mit Monoepoxiden, insbesondere mit Monoglycidylethern, geeignet. Derartige Additionsprodukte weisen das Strukturelement der Formel (III) oder (III'), insbesondere der Formel (III") oder (III'") auf.

Als Aminosilan **AS,** welches mindestens eine sekundäre oder tertiäre Aminogruppe aufweist, sind weiterhin Produkte aus der Michael-artigen Addition von primären Aminosilanen, insbesondere von 3-Aminopropyl-trimethoxysilan oder 3-Aminopropyl-dimethoxymethylsilan, an Michaelakzeptoren wie Acrylnitril, Acryl- und Methacrylsäureestern, Maleinsäure- und Fumarsäurediestern, Citraconsäurediestern und Itaconsäurediestern, beispielsweise N-(3-Trimethoxysilyl-propyl)-amino-bernsteinsäuredimethyl- und -diethylester. Bevorzugt sind die Michael-artigen Additionsprodukte, insbesondere N-(3-Trimethoxysilyl-propyl)-amino-bernsteinsäurediethylester.

Meist bevorzugt als Aminosilan **AS,** welches mindestens eine sekundäre oder tertiäre Aminogruppe aufweist, sind Verbindungen der Formel (V) oder (VI), insbesondere N-(2-Aminoethyl)-3-aminopropyl-trimethoxysilan.

Der Anteil des Polysilanes **PS** beträgt vorzugsweise 0.5 - 15 Gew.-%, insbesondere 1 - 10 Gew.-%, bevorzugt 1 - 6 Gew.-%, bezogen auf das Gewicht der Haftvoranstrich-Zusammensetzung. Der Anteil Aminosilans **AS,** welches mindestens eine sekundäre oder tertiäre Aminogruppe aufweist, beträgt vorzugsweise 0.5 - 25 Gew.-%, insbesondere 1 - 15 Gew.-%, bevorzugt 2 - 6 Gew.-%, bezogen auf das Gewicht der Haftvoranstrich-Zusammensetzung.

Die Haftvoranstrich-Zusammensetzung enthält mindestens ein Mercaptosilan **MS** oder ein Addukt eines Mercaptosilans **MS.** Das Mercaptosilan **MS** weist vorzugsweise die Formel (VIII) auf.

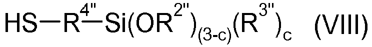

Hierbei steht R^{2"} unabhängig voneinander für Wasserstoff oder für eine Alkylgruppe mit 1 bis 4 C-Atome oder eine Acylgruppe, bevorzugt für Methyl. Weiterhin stehen R^{3"} unabhängig voneinander für H oder für eine Alkylgruppe mit 1 bis 10 C-Atome und R^{4"} für eine lineare oder verzweigte Alkylengruppe mit 1 bis 6 C-Atomen, insbesondere für Propylen, und c für einen Wert von 0, 1 oder 2, bevorzugt 0.

Als Mercaptosilane **MS** sind insbesondere geeignet Mercaptomethyltrimethoxysilan, Mercaptomethyl-triethoxysilan, Mercaptomethyl-dimethoxymethylsilan, Mercaptomethyl-diethoxymethylsilan, 3-Mercaptopropyl-trimethoxysilan, 3-Mercaptopropyl-triethoxysilan, 3-Mercaptopropyl-triisopropoxysilan, 3-Mercaptopropyl-methoxy(1,2-ethylendioxy)-silan, 3-Mercaptopropyl-methoxy-(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan und 4-Mercapto-3,3-dimethylbutyl-trimethoxysilan.

Als Mercaptosilane **MS** sind 3-Mercaptopropyl-trimethoxysilan und 3-Mercaptopropyl-triethoxysilan, insbesondere 3-Mercaptopropyl-trimethoxysilan, bevorzugt.

Als Addukt eines Mercaptosilans **MS** sind insbesondere die Additionsprodukte von Polyisocyanaten, insbesondere Di- oder Triisocyanate, von NCOfunktionellen Polyol/Polyisocyanat-Addukten, insbesondere mit einem Equivalentgewicht von weniger als 1000g / NCO-Gruppe, vor allem von weniger als 500g / NCO-Gruppe, mit Diglycidylether oder mit Epoxysilane geeignet.

Bevorzugt werden Haftvoranstrich-Zusammensetzungen, welche Mercaptosilans **MS** enthalten, insbesondere ohne das Vorhandensein eines Addukt eines Mercaptosilans **MS.**

Der Anteil des Mercaptosilans **MS** beträgt vorteilhaft 0.5 - 15 Gew.-%, insbesondere 1 - 10 Gew.-%, bevorzugt 1 - 6 Gew.-%, bezogen auf das Gewicht der Haftvoranstrich-Zusammensetzung.

Der Anteil des Addukts des Mercaptosilans **MS** beträgt vorteilhaft 0.5 - 40 Gew.-%, insbesondere 5 - 35 Gew.-%, bevorzugt 10 - 30 Gew.-%, bezogen auf das Gewicht der Haftvoranstrich-Zusammensetzung.

Die Haftvoranstrich-Zusammensetzung enthält vorteilhaft weiterhin mindestens ein Organo-Titanverbindung, insbesondere in einer Menge von 0.1 - 15 Gew.-%, insbesondere von 0.1 - 10 Gew.-%, bevorzugt von 1 - 6 Gew.-%, bezogen auf das Gewicht der Haftvoranstrich-Zusammensetzung. Die Organo-Titanverbindung weist hierbei mindestens einen über eine Sauerstoff-Titan-Bindung an das Titanatom gebundenen Substituenten auf.

Als über eine Sauerstoff-Titan-Bindung an das Titanatom gebundenen Substituenten sind besonders geeignete Substituenten diejenigen, welche aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind.

Besonders geeignet sind Verbindungen, bei denen alle an das Titan gebundene Substituenten aus der Gruppe umfassend Alkoxygruppe, Sulfonatgruppe, Carboxylatgruppe, Dialkylphosphatgruppe, Dialkylpyrophosphatgruppe und Acetylacetonatgruppe ausgewählt sind, wobei alle Substituenten identisch oder verschieden von einander sein können.

Als Alkoxygruppen haben sich insbesondere sogenannte Neoalkoxy-Substituenten, insbesondere der folgenden Formel (XI), besonders geeignet erwiesen.

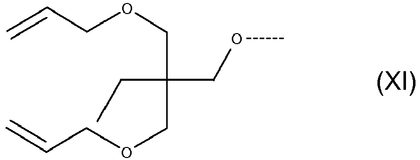

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der folgenden Formel (XII)

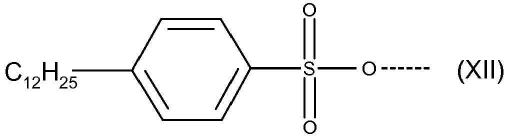

Besonders geeignet als Carboxylatgruppen haben sich insbesondere Carboxylate von Fettsäuren erwiesen. Als bevorzugte Carboxylate gilt Decanoat.

In obigen Formeln stellt die gestrichelte Linie die Bindung des Sauerstoffs zum Titan dar.

Organo-Titanverbindungen sind kommerziell erhältlich, beispielsweise bei der Firma Kenrich Petrochemicals oder DuPont. Beispiele für geeignete Organo-Titanverbindungen sind beispielsweise Ken-React® KR TTS, KR 7, KR 9S, KR 12, KR 26S, KR 33DS, KR 38S, KR 39DS, KR44, KR 134S, KR 138S, KR 158FS, KR212, KR 238S, KR 262ES, KR 138D, KR 158D, KR238T, KR 238M, KR238A, KR238J, KR262A, LICA 38J, KR 55, LICA 01, LICA 09, LICA 12, LICA 38, LICA 44, LICA 97, LICA 99, KR OPPR, KR OPP2 von Kenrich Petrochemicals oder Tyzor ® ET, TPT, NPT, BTM, AA, AA-75, AA-95, AA-105, TE, ETAM, OGT von DuPont.

Bevorzugt gelten Ken-React® KR 7, KR 9S, KR 12, KR 26S, KR 38S, KR44, LICA 09, LICA 44, NZ 44, sowie Tyzor® ET, TPT, NPT, BTM, AA, AA-75, AA-95, AA-105, TE, ETAM von DuPont.

Als besonders bevorzugt sind Organo-Titanverbindungen mit über eine Sauerstoff-Titan-Bindung an das Titanatom gebundenen Substituenten der Formeln (XI) und/oder (XII).

Weiterhin kann die Haftvoranstrich-Zusammensetzung bei Bedarf mindestens eine Organo-Zirkoniumverbindungen enthalten. Eine Organo-Zirkoniumverbindung weist hierbei mindestens einen über eine Sauerstoff-Zirkonium-Bindung an das Zirkoniumatom gebundenen Substituenten auf.

Als Organo-Zirkoniumverbindungen sind insbesondere solche geeignet, welche mindestens eine funktionelle Gruppe tragen, welche ausgewählt ist aus der Gruppe umfassend Alkoxygruppe, Sulfonatgruppe, Carboxylatgruppe, Phosphat oder Mischungen davon trägt, und welche über ein Sauerstoff-Zirkonium-Bindung direkt an ein Zirkoniumatom gebunden ist.

Als Alkoxygruppen haben sich insbesondere Isopropoxy- und sogenannte Neoalkoxy-Substituenten, insbesondere der Formel (XI), besonders geeignet erwiesen

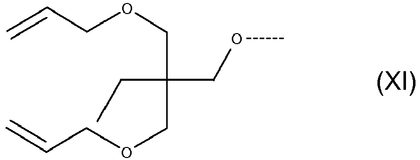

Als Sulfonsäuren haben sich insbesondere aromatische Sulfonsäuren, deren Aromaten mit einer Alkylgruppe substituiert sind, besonders geeignet erwiesen. Als bevorzugte Sulfonsäuren gelten Reste der Formel (XII)

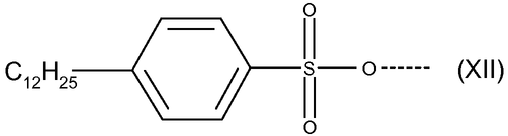

Als Carboxylatgruppen haben sich insbesondere Carboxylate von Fettsäuren besonders geeignet erwiesen. Als bevorzugte Carboxylate gelten Stearate und Isostearate.

In obigen Formeln stellt die gestrichelte Linie die Bindung des Sauerstoffs zum Zirkonium dar.

Organo-Zirkoniumverbindungen sind kommerziell erhältlich, beispielsweise bei der Firma Kenrich Petrochemicals. Beispiele für geeignete Organo-Zirkoniumverbindungen sind beispielsweise Ken-React® NZ 38J, NZ TPPJ, KZ OPPR, KZ TPP, NZ 01, NZ 09, NZ 12, NZ38, NZ 44, NZ 97.

Weiterhin kann die Haftvoranstrich-Zusammensetzung weitere Silane, wie sie dem Fachmann für Haftvoranstriche geläufig sind, umfassen, insbesondere Epoxysilane, (Meth)acrylatosilane oder Alklysilane oder Vinylsilane, insbesondere 3-Glycidyloxypropyltrimethoxysilan, 3-Glycidyloxypropyltriethoxysilan, 3-(Meth)acryloxypropyltriethoxysilan, 3-(Meth)acryloxypropyltrimethoxysilan, Vinyltrimethoxysilan und Vinyltriethoxysilan.

Es ist dem Fachmann klar, dass diese Organo-Titanverbindungen und Organo-Zirkoniumverbindungen unter dem Einfluss von Wasser hydrolysieren und an das Ti- oder Zr-Atom gebundene OH-Gruppen bilden. Derartige hydrolysierte, beziehungsweise teilhydrolysierte, Organo-Titanverbindungen und Organo-Zirkoniumverbindungen können dann ihrerseits kondensieren und Kondensationsprodukte bilden, welche Ti-O-Ti, Zr-O-Zr Bindungen aufweisen. Sind Silane und/oder Titanate und/oder Zirkonate als Haftvermittler gemischt, sind auch gemischte Kondensationsprodukte möglich, welche Si-O-Ti, Si-O-Zr oder Ti-O-Zr Bindungen aufweisen. Ein geringer Anteil an derartigen Kondensationsprodukten ist möglich, insbesondere wenn sie löslich, emulgierbar oder dispergierbar sind.

Bevorzugt umfasst die Haftvoranstrich-Zusammensetzung mindestens eine Organo-Titanverbindung.

Es hat sich als vorteilhaft erwiesen, wenn die Haftvoranstrich-Zusammensetzung ein Lösungsmittel, insbesondere organische Lösungsmittel enthält. Als derartige organische Lösungsmittel eignen sich insbesondere Kohlenwasserstoffe, Ketone, Carbonsäureester oder Alkohole. Bevorzugte Beispiele hierfür sind Toluol, Xylol, Hexan, Heptan, Methylethylketon, Aceton, Butylacetat, Ethylacetat, Methanol. Bevorzugte Lösungsmittel sind Kohlenwasserstoffe, insbesondere Toluol und Heptan und Hexan. Weiterhin gibt es spezifische Ausführungsformen, in denen auch Wasser als Lösungsmittel, allenfalls in Abmischung mit einem organischen Lösungsmittel, geeignet ist.

Das Lösungsmittel wird insbesondere in einer Menge von 10 - 99 Gew.-%, insbesondere von 40 - 95 Gew.-%, bezogen auf das Gewicht der Haftvoranstrich-Zusammensetzung, eingesetzt.

Unter Umständen kann es von Vorteil sein, dass die Haftvoranstrich-Zusammensetzung weiterhin Polyisocyanate oder Isocyanatgruppen aufweisende Polyurethanprepolymere aufweist. Als derartige Isocyanate sind insbesondere diejenigen wie sie bereits für die Herstellung des Polysilans **PS** beschrieben wurden. Isocyanatgruppen aufweisende Polyurethanprepolymere lassen sich insbesondere aus den gerade genannten Polyisocyanaten und den weiter unten genannten Polyolen und/oder Polyaminen nach bekannter Art und Weise erhalten.

Die Haftvoranstrich-Zusammensetzung kann gegebenenfalls weitere Bestandteile aufweisen. Derartige weitere Bestandteile sollten jedoch die Lagerstabilität der Zusammensetzung nicht beeinträchtigen. Als zusätzliche Bestandteile sind beispielsweise Katalysatoren Stabilisatoren, Tenside, Säuren, Farbstoffe und Pigmente.

Es hat sich als vorteilhaft herausgestellt, dass die Haftvoranstrich-Zusammensetzungen isocyanatfrei ist, d.h. dass sie keine Substanzen mit reaktiven NCO-Gruppen aufweist.

Es hat sich nun gezeigt, dass diese Haftvoranstrich-Zusammensetzungen äusserst gut zum Erstellen eines Haftvoranstriches auf einem Substrat **S1** verwendet werden können, wobei die Substrattemperatur tief ist, d.h. tiefer als 5°C ist. Es zeigte sich weiterhin, dass insbesondere auch bei Substrattemperaturen zwischen 0°C und -20°C, bevorzugt zwischen -5°C und -15°C, exzellente Haftvoranstriche erzielt werden können.

Somit betrifft in einem weiteren Aspekt die Erfindung auch ein Verfahren zur Herstellung eines mit Haftvoranstrich-Zusammensetzungen beschichteten Substrates **S1,** welches den folgenden Schritt umfasst:
- Applizieren einer Haftvoranstrich-Zusammensetzung, wie sie vorgängig beschrieben wurde, auf ein Substrat **S1,** welches die Temperatur von tiefer als 5°C, insbesondere von zwischen 0°C und -20°C, bevorzugt von zwischen -5°C und -15°C.

Als Substrate **S1** sind grundsätzlich die meisten natürlichen oder künstlichen Substrate möglich. Bei Bedarf können sie vor dem Applizieren der Haftvoranstrich-Zusammensetzungen vorbehandelt werden. Derartige Vorbehandlungen umfassen insbesondere physikalische und/oder chemische Reinigungsverfahren, beispielsweise Schleifen, Sandstrahlen, Bürsten oder dergleichen oder Behandeln mit Reinigern oder Lösemitteln; oder das Aufbringen eines Haftvermittlers, einer Haftvermittlerlösung oder eines Primers; oder eine Beflammung oder eine Plasmabehandlung, insbesondere eine Luftplasma-Vorbehandlung bei atmosphärischem Umgebungsdruck.

Insbesondere handelt es sich beim Substrat **S1** um einen mineralisches Substrat, um einen Kunststoff oder ein metallisches Substrat.

Als mineralisches Substrat wird insbesondere Glas oder Glaskeramik, insbesondere in Form einer Scheibe, bevorzugt.

Als Kunststoff werden insbesondere Polyvinylchlorid (PVC), Polyurethane, Poly(meth)acrylate, insbesondere in Form einer Beschichtung oder Lackes, bevorzugt.

Als metallisches Substrat werden hier Metalle, Metalllegierungen sowie beschichtete Metalle und Metalllegierungen verstanden. Es eignen sich insbesondere Leichtmetalle, Buntmetalle und Eisenmetalle sowie deren Legierungen, wie Aluminium, Eisen, Kupfer, Zink, deren Legierungen, insbesondere Messing und Stahl.

Die Applikation der Haftvoranstrich-Zusammensetzung kann mittels Tuch, Filz, Rolle, Sprühen, Schwamm, Pinsel, Tauchbeschichten oder dergleichen erfolgen und kann sowohl manuell als auch mittels Roboter erfolgen.

Auf ein derart mit Haftvoranstrich-Zusammensetzung beschichtetes Substrat kann ein Klebstoff appliziert werden. Somit betrifft in einem weiteren Aspekt die Erfindung ein Verfahren zum Verkleben von zwei Substraten **S1** und **S2.** Hierfür gibt es unterschiedliche Möglichkeiten:
In einer ersten Variante umfasst es die folgenden Schritte:
   a) Applizieren einer Haftvoranstrich-Zusammensetzung, wie sie vorgängig beschrieben wurde, auf ein erstes Substrat **S1,** welches die Temperatur von tiefer als 5°C, insbesondere von zwischen 0°C und -20°C, bevorzugt von zwischen -5°C und -15°C aufweist;
   b) Applizieren eines Klebstoffes auf die abgelüftete nach Schritt a) applizierte Haftvoranstrich-Zusammensetzung;
   c) Kontaktieren des Klebstoffes mit einem zweiten Substrat **S2.**
In einer zweiten Variante umfasst es die folgenden Schritte:
   a') Applizieren einer Haftvoranstrich-Zusammensetzung, wie sie vorgängig beschrieben wurde, auf ein erstes Substrat **S1,** welches die Temperatur von tiefer als 5°C, insbesondere von zwischen 0°C und -20°C, bevorzugt von zwischen -5°C und -15°C aufweist;
   b') Applikation eines Klebstoffes oder Dichtstoffes auf die Oberfläche eines zweiten Substrates **S2**
   c') Kontaktieren des Klebstoffes mit der abgelüfteten Zusammensetzung, welche sich auf dem Substrat **S1** befindet.
In einer dritten Variante umfasst es die folgenden Schritte:
   a") Applizieren einer Haftvoranstrich-Zusammensetzung, wie sie vorgängig beschrieben wurde auf ein erstes Substrat **S1** und/oder zweites Substrat **S2,** welches die Temperatur von tiefer als 5°C, insbesondere von zwischen 0°C und -20°C, bevorzugt von zwischen -5°C und -15°C aufweist;
   b") Applizieren eines Klebstoffes auf das erste Substrat **S1** und zweite Substrat **S2,** auf welche zumindest eines davon nach Schritt a") eine Haftvoranstrich-Zusammensetzung appliziert worden ist;
   c") Kontaktieren der applizierten Klebstoffe miteinander unter Fügen der Subtratteile zu einem Klebverbund.
In einer vierten Variante umfasst es die folgenden Schritte:
   a'") Applizieren einer Haftvoranstrich-Zusammensetzung, wie sie vorgängig beschrieben wurde, auf ein erstes Substrat **S1,** welches die Temperatur von tiefer als 5°C, insbesondere von zwischen 0°C und -20°C, bevorzugt von zwischen -5°C und -15°C aufweist;
   b"') Ablüften der Zusammensetzung
   c"') Applikation eines Klebstoffes zwischen die Oberflächen des Substrates **S1** und **S2.**

In all diesen vier besteht das zweite Substrat **S2** aus demselben oder unterschiedlichem Material wie das Substrat **S1.**

Das Substrat **S1** und/oder **S2** können vielfältiger Art sein. Die Möglichkeiten für das zweite Substrat **S2** können wie oben für das Substrat **S1** beschrieben sein. Insbesondere ist zumindest eines der Substrates **S1** oder **S2** Glas oder Glaskeramik. Insbesondere handelt es sich bei einem Substrat um Glas oder Glaskeramik und beim anderen Substrat um einen Lack oder ein lackiertes Metall oder ein lackierte Metalllegierung. Somit ist das Substrat **S1,** respektive **S2,** Glas oder Glaskeramik ist und dass das Substrat **S2,** respektive **S1,** ein Lack oder ein lackiertes Metall oder ein lackierte Metalllegierung.

Nach dem Schritt c), c'), c" oder c'") schliesst sich typischerweise ein Schritt d) des Aushärtens des Klebstoffes an. Der Fachmann versteht, dass je nach verwendetem System und Reaktivität des Klebstoffs Vernetzungsreaktionen, und damit bereits das Aushärten, bereits während der Applikation beginnen kann. Der Hauptteil der Vernetzung und damit im engeren Sinn des Terms das Aushärten findet jedoch nach der Applikation statt, ansonsten sich nämlich auch Probleme mit dem Aufbau der Haftung zur Substratoberfläche ergeben.

Als Klebstoffe sind verschiedene Klebstoffsysteme einsetzbar. Insbesondere handelt es sich um feuchtigkeitshärtende Klebstoffe auf Basis von Prepolymeren, welche mit Isocyanatgruppen und/oder Alkoxysilan terminiert sind

Als geeignete Klebstoffe auf Basis von Alkoxysilan-terminierten Prepolymeren sind einkomponentige feuchtigkeitshärtende Klebstoffe die sogenannte MS-Polymere oder Alkoxysilan-terminierte Polyurethanprepolymere, insbesondere solche wie sie hergestellt aus Polyolen und Isocyanaten mit anschliessender Reaktion eines Isocyanat-reaktiven Organosilanes oder einem Isocyanat-funktionellen Organosilanes hergestellt werden.

Als geeignete Klebstoffe auf Basis von Isocyanat-terminierten Prepolymeren sind einerseits zweikomponentige Polyurethanklebstoffe zu verstehen, deren erste Komponente ein Amin- oder ein Polyol umfassen und deren zweite Komponente eine NCO-haltiges Prepolymer oder ein Polyisocyanat umfassen. Beispiele für solche zweikomponentige raumtemperaturhärtende Polyurethanklebstoffe sind solche aus SikaForce® -Produktelinie, wie sie kommerziell erhältlich sind von Sika Schweiz AG.

Als geeignete Klebstoffe auf Basis von Isocyanat-terminierten Prepolymeren sind weiterhin reaktive Polyurethan-Heissschmelzklebstoffe zu verstehen, die eine thermoplastisches Polymer sowie ein Isocyanat-terminierten Prepolymeren oder ein thermoplastisches Isocyanat-terminierten Prepolymeren enthalten. Solche reaktiven Polyurethan-Heissschmelzklebstoffe werden aufgeschmolzen und verfestigen sich einerseits beim Abkühlen und vernetzen andererseits über eine Reaktion mit Luftfeuchtigkeit.

Als geeignete Klebstoffe auf Basis von Isocyanat-terminierten Prepolymeren sind weiterhin einkomponentige feuchtigkeitshärtende Polyurethanklebstoffe zu verstehen. Solche Kleb- oder Dichtstoffe vernetzen unter dem Einfluss von Feuchtigkeit, insbesondere von Luftfeuchtigkeit. Beispiele für solche einkomponentige feuchtigkeitshärtende Polyurethanklebstoffe sind solche aus SikaFlex®- und SikaTack®- Produktelinie, wie sie kommerziell erhältlich sind von Sika Schweiz AG.

Die oben erwähnten Isocyanat-terminierten Prepolymeren werden aus Polyolen, insbesondere Polyoxyalkylenpolyolen, und Polyisocyanaten, insbesondere Diisocyanaten, hergestellt.

Bevorzugt sind Klebstoffe auf Basis von Isocyanat-terminierten Prepolymeren. Meist bevorzugt handelt es sich um einkomponentige feuchtigkeitshärtende Polyurethanklebstoffe basierend auf Isocyanat-terminierten Prepolymeren.

Es hat sich gezeigt, dass insbesondere bei feuchtigkeitshärtenden Polyurethan-Klebstoffen oder -Dichtstoffen eine starke Verbesserung der Haftung bei tiefen Temperaturen, das heisst, insbesondere bei einer Temperatur von unter 5°C, insbesondere bei einer Temperatur zwischen 0°C und -20°C, unter Verwendung der beschriebenen Zusammensetzung erreicht werden kann. Es versteht sich von selbst, dass wässrige Zusammensetzungen aufgrund von Eisbildung eher ungeeignet sind für Applikationstemperaturen von unter 0°C.

Diese Klebverfahren finden insbesondere in der Herstellung von Artikeln für die industrielle Fertigung, insbesondere von Transportmittel Anwendung. Derartige Artikel stellen insbesondere Automobile, Busse, Lastkraftwagen, Schienenfahrzeuge, Schiffe oder Luftfahrzeuge dar.

Als meist bevorzugte Anwendung ist das Verglasen von Transportmitteln, insbesondere von Strassen- und Schienenfahrzeugen, zu nennen.

Aufgrund der ausgezeichneten Verbesserung der Haftung der Kleb- und Dichtstoffe bei tiefen Temperaturen eignet sich dieses Verfahren insbesondere auch für die Reparaturverglasung. Es können nämlich Fahrzeuge auf der Strasse vor Ort, insbesondere auch im Winter, verglast werden, ohne dass das Fahrzeug zuerst in eine temperierte Garage gestellt werden müssen. Dies ist vor allem für Reparaturen von Fahrzeugscheiben in weitläufigen Gebieten wichtig, insbesondere wo die Strassen häufig lose Steine oder Kies aufweisen. Solche Gegenden sind beispielsweise in Skandinavien, Russland, China, Argentinien, Chile, Canada oder USA häufig zu finden.

Besonders eignet sich die Haftvoranstrich-Zusammensetzung sich für ein Verfahren zur Reparatur einer Verglasung eines Transportmittels, insbesondere eines Automobils bei einer Umgebungstemperatur von tiefer als 5°C, insbesondere von zwischen 0°C und -20°C, bevorzugt von zwischen -5°C und -15°C, welches die Schritte umfasst
i) Entfernen des defekten Glases, insbesondere einer defekten Scheibe;
ii) Applizieren einer Haftvoranstrich-Zusammensetzung, wie sie vorgängig beschrieben wurde, auf ein einzuklebendes Glas, insbesondere Scheibe, und/oder auf den zu verklebenden Flansch des Transportsmittels;
iii) Applizieren eines feuchtigkeitshärtenden einkomponentigen Klebstoff, insbesondere eines feuchtigkeitshärtenden einkomponentigen Polyurethanklebstoffes, welcher eine Temperatur zwischen 10°C und 80°C, insbesondere etwa 23°C, aufweist, auf das zu verklebende Glas und/oder den zu verklebenden Flansch des Transportmittels;
iv) Fügen von Glas und Flansch über den sich dazwischen befindlichen Klebstoff.

Es hat sich gezeigt, dass mittels dieses Verfahrens bei kalten Bedingungen, wie sie im Winter vielfach auftreten, Fahrzeuge auf der Strasse vor Ort, verglast werden können, ohne dass das Fahrzeug zuerst in eine temperierte Garage gestellt werden müssen. Dies ist vor allem für Reparaturen von Fahrzeugscheiben in weitläufigen Gebieten wichtig, insbesondere wo die Strassen häufig lose Steine oder Kies aufweisen. Solche Gegenden sind beispielsweise in Skandinavien, Russland, China, Argentinien, Chile, Canada oder USA häufig zu finden.

Da die Haftvermittlung auch bei höheren Temperaturen, d.h. bei Temperaturen von >5 °C, typischerweise etwa Raumtemperatur, gegeben ist, kann eine und dieselbe Haftvoranstrich-Zusammensetzung verwendet werden und somit die Notwendigkeit eines Sommer- und eines Winterproduktes oder einer jahreszeitlich unterschiedlichen Arbeitsweise vermieden werden.

### Beispiele

### Herstellung eines beispielhaften Polysilans: PS-1 (entsprechend Formel (X'))

4.61 g Glycerin wurde in 100 g Toluol in einem Rührgefäss vorgelegt, anschliessend wurde unter Stickstoff 20.53 g 3-Isocyanato-Propyltrimethoxysilan (Geniosil® GF 40, Wacker) unter Rühren zugegeben. Anschliessend wurden 0.0125 g DABCO (1,4-diazabicyclo[2.2.2]octan) zugegeben, bei 50°C während 3 Stunden gerührt, während 4 Tagen bei Raumtemperatur unter Stickstoff stehen gelassen, nochmals 0.2 g DABCO hinzu gegeben und nochmals während drei Tagen bei 70°C unter Stickstoff gerührt. Es konnte titrimetrisch keine freien Isocyanat-Gruppen mehr nachgewiesen werden. Die Mischung wurde in der in Tabelle 1 angegebenen Menge als ***PS-1*** eingesetzt.

### Herstellung von beispielhaften Haftvoranstrich-Zusammensetzungen

Die Zusammensetzungen wurden gemäss den Angaben in Tabelle 1 unter Stickstoff in einem Rührgefäss verrührt und in dicht schliessende Aluminiumflaschen gegeben und sofort für die Haftungstests verwendet.

**Tabelle 1. Zusammensetzungen von Haftvoranstrich-Zusammensetzungen.**

| | ***R1*** | ***R2*** | ***1*** | ***2*** | ***3*** |
|---|---|---|---|---|---|
| A1110² [GT]¹ | 3.75 | | | | |
| A1120³ [GT]¹ **(AS)** | | 3.75 | | | 1.50 |
| A 1170⁴ [GT]¹ **(PSA)** | | | 3.75 | 3.75 | |
| A189⁵ [GT]¹ **(MS)** | 3.75 | 3.75 | 3.75 | 3.75 | 1.50 |
| ***PS-1*** [GT]¹ **(PS)** | | | | | 30.00 |
| Tyzor OGT⁶ [GT]¹ | | | | 2.00 | |
| Toluol [GT]¹ | 92.50 | 92.50 | 92.50 | 90.50 | 67.00 |

| | | | | | |
|---|---|---|---|---|---|
| ¹ GT=Gewichtsteile ²A1110=Silquest® A1110, GE Silicones, Schweiz, 3-Aminopropyl-trimethoxysilan ³A1120=Silquest® A1120, GE Silicones, Schweiz N-(2-Aminoethyl)-3-aminopropyl-trimethoxysilan, ⁴A1170= Silquest® A1170, GE Silicones, Schweiz, Bis(trimethoxysilylpropyl)amin ⁵A189= Silquest® A189, GE Silicones, Schweiz, 3-Mercaptopropyl-trimethoxysilan ⁶Tyzor® OGT, DuPont, Octylenglycoltitanat = Tetrakis(2-ethylhexan-1,3-diloato)titanat | | | | | |

Die Haftvoranstrich-Zusammensetzungen wurden mittels eines mit der Zusammensetzung getränkten fusselfreien Kleenex® Tuch bei der Applikationstemperatur ("Tₐₚₚ") von 23°C, bzw. -10°C appliziert, (wipe-on), unmittelbar darauf mit einem trockenen Zellulosetuch überschüssige Zusammensetzung abgewischt (wipe-off) und während der Ablüftezeit von 10 Minuten ("t_{AZ}") abgelüftet.

Es wurden die folgenden Substrate verwendet

| | |
|---|---|
| Float-Glass | Rocholl, Deutschland aufgetragen auf Zinnseite ("Glas_{Sn}") |
| Float-Glass | Rocholl, Deutschland aufgetragen auf Luftseite ("Glas_{Air}") |
| VSG-Keramik | Rocholl, Deutschland Nr. 14279 ("VSG") |
| ESG-Keramik | Rocholl, Deutschland Nr. 14251 ("ESG") |
| Glaskeramik | Frontscheibe eines BMW 316/328/M3 Limousine+ Touring (Pilkington) ("BMW") |
| Glaskeramik | Frontscheibe eines Mazda 323 Coupe F51 (BG) (Pilkington) ("Mazda") |
| Glaskeramik | Frontscheibe eines Honda Integra Type L Coupe 1998 (Swiss Lamex) ("Honda") |
| Glaskeramik | Frontscheibe eines VW Transporter T4 1990/98 (GT Savety)("VW") |

Sowohl die Zusammensetzungen als auch die Substrate wurden bei der Applikationstemperatur während mindestens 12 Stunden konditioniert.

Nach Ablauf der Ablüftezeit wurde in einem Raum von -10°C, bzw. 23°C, SikaTack®-Move Goes Cool (kommerziell bei Sika Schweiz AG erhältlich) (Klebstofftemperatur 23°C) als Dreieckraupe (12 mm Basis, 8 mm Höhe) appliziert und mittels Backpapier auf eine Schichtdicke von 4 mm verpresst.

Alle Substrate wurden vor dem Konditionieren mit einem mit Isopropanol getränkten Zellulosetuch abgewischt und während 10 Minuten abgelüftet.

Der Klebstoff wurde nach einer Aushärtezeit von 7 Tagen Klimaraumlagerung (,KL') (23°C, 50% rel. Luftfeuchtigkeit), sowie nach einer anschliessenden Wasserlagerung (,WL') in Wasser bei 23°C während 7 Tagen, sowie nach einer anschliessend Kataplasma-Lagerung (,CP') von 7 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche:
Je höher der Anteil an kohäsivem Bruch ist, umso besser wird die Verklebung eingeschätzt. Testresultate mit Kohäsionsbrüchen von weniger als 50 %, insbesondere weniger als 40 %, gelten typischerweise als ungenügend.

Die Haftresultate sind in den Tabellen 2 und 3 aufgeführt.

Die Referenzbeispiele ***R1,*** bzw. ***R2,*** entsprechen dem Beispiel 1, bei welchem das Polysilan mit sekundärer Aminogruppe (A1170) durch ein primäres Aminosilan (A1110), bzw. durch ein Monosilan mit primärer und sekundärer Aminogruppe (A1120), ersetzt wurde. Das Beispiel **3** stellt ein Beispiel dar, welches eine Kombination eines Polysilans ***(PS-1)*** und eines Silans mit sekundärer Aminogruppe (A1120) aufweist.

Die Ergebnisse zeigen, dass die Beispiele ***1, 2*** und ***3*** verbesserte Haftungen, insbesondere bei tiefen Temperaturen, d.h. bei -10°C, aufweisen.

**Tabelle 2. Haftergebnisse auf unterschiedlichen Untergründen bei unterschiedlichen Applikationstemperaturen.**

| | | Glas_{Sn} | | | Glas_{Air} | | | VSG | | | ESG | | |
|---|---|---|---|---|---|---|---|---|---|---|---|---|---|
| | Tₐₚₚ | KL | WL | CP | KL | WL | CP | KL | WL | CP | RT | WL | CP |
| ***R1*** | -*10°C* | *5* | *0* | *30* | *95* | *90* | *50* | *100* | *0* | *10* | *100* | *0* | *10* |
| ***R2*** | -*10°C* | *80* | *70* | *100* | *100* | *100* | *40* | *95* | *25* | *50* | *100* | *10* | *5* |
| ***1*** | -*10°C* | *60* | *10* | *80* | *100* | *100* | *30* | *100* | *100* | *100* | *100* | *100* | *100* |
| ***2*** | -*10°C* | *20* | *20* | *100* | *100* | *100* | *50* | *100* | *100* | *100* | *100* | *100* | *100* |
| ***3*** | -*10°C* | *30* | *5* | *95* | *95* | *80* | *10* | *100* | *75* | *100* | *100* | *100* | *100* |
| | | | | | | | | | | | | | |
| ***R1*** | 23°C | 95 | 30 | 80 | 100 | 30 | 10 | 100 | 0 | 20 | 100 | 0 | 0 |
| ***R2*** | 23°C | 100 | 30 | 85 | 100 | 80 | 80 | 100 | 0 | 5 | 100 | 0 | 0 |
| **1** | 23°C | 0 | 0 | 100 | 100 | 90 | 5 | 100 | 100 | 100 | 100 | 100 | 100 |
| **2** | 23°C | 95 | 50 | 100 | 100 | 100 | 10 | 100 | 100 | 100 | 100 | 100 | 100 |
| **3** | 23°C | 50 | 30 | 100 | 100 | 95 | 0 | 100 | 25 | 100 | 100 | 10 | 100 |

**Tabelle 3. Haftergebnisse auf unterschiedlichen Original-Glaskeramiken bei unterschiedlichen Applikationstemperaturen.**

| | | BMW | | | Mazda | | | Honda | | | VW | | |
|---|---|---|---|---|---|---|---|---|---|---|---|---|---|
| | Tₐₚₚ | KL | WL | CP | KL | WL | CP | KL | WL | CP | RT | WL | CP |
| **R1** | -*10°C* | *100* | *5* | *100* | *80* | *0* | *40* | *100* | *30* | *90* | *100* | *0* | *70* |
| **R2** | -*10°C* | *95* | *50* | *90* | *100* | *95* | *100* | *95* | *100* | *100* | *100* | *10* | *90* |
| ***1*** | -*10°C* | *100* | *100* | *95* | *100* | *100* | *100* | *100* | *100* | *100* | *100* | *100* | *100* |
| ***2*** | -*10°C* | *100* | *100* | *100* | *100* | *100* | *70* | *100* | *100* | *95* | *100* | *100* | *100* |
| ***3*** | -*10°C* | *100* | *100* | *100* | *50* | *50* | *50* | *100* | *100* | *100* | *95* | *100* | *100* |
| | | | | | | | | | | | | | |
| ***R1*** | 23°C | 100 | 0 | 20 | 100 | 0 | 0 | 100 | 10 | 20 | 100 | 5 | 40 |
| ***R2*** | 23°C | 100 | 20 | 50 | 95 | 0 | 0 | 100 | 30 | 50 | 100 | 5 | 60 |
| ***1*** | 23°C | 100 | 90 | 100 | 100 | 100 | 100 | 100 | 30 | 95 | 100 | 5 | 100 |
| ***2*** | 23°C | 100 | 100 | 100 | 100 | 100 | 100 | 100 | 100 | 100 | 100 | 100 | 100 |
| ***3*** | 23°C | 100 | 100 | 100 | 85 | 10 | 75 | 90 | 50 | 60 | 70 | 10 | 50 |

## Patentansprüche

1. Verwendung einer Haftvoranstrich-Zusammensetzung enthaltend
mindestens ein Mercaptosilan **MS** oder ein Addukt eines Mercaptosilans **MS** sowie entweder
mindestens ein Polysilan **PSA,** welches mindestens eine sekundäre oder teritäre Aminogruppe aufweist;
oder
mindestens ein Polysilan **PS** und
mindestens ein Aminosilan **AS,** welches mindestens eine sekundäre oder tertiäre Aminogruppe aufweist;
zum Erstellen eines Haftvoranstriches auf einem Substrat **S1** bei einer Substrat-Temperatur von tiefer als 5°C, insbesondere zwischen 0°C und -20°C, bevorzugt zwischen -5°C und -15°C;
wobei
unter einem "Addukt eines Mercaptosilans **MS**" das Reaktionsprodukt eines Mercaptosilanes mit einem Epoxid, Polyepoxid oder Polyisocyanat verstanden wird, bei welchem die Mercaptogruppe mit einer Epoxidgruppe oder Isocyanatgruppe reagiert;
unter "Polysilan" ein Silan verstanden wird, welches im gleichen Molekül zwei oder mehrere Silangruppen aufweist;
unter "Silan" eine Organo-Siliziumverbindung verstanden wird, welche mindestens eine Silangruppe aufweist; und
unter "Silangruppe" eine über ein Siliziumatom an einen organischen Rest gebundene Gruppe, welche mindestens eine bis drei hydrolysierbare Reste oder OH aufweist.

2. Verwendung gemäss Anspruch 1, **dadurch gekennzeichnet, dass** das Polysilanes **PSA,** welches mindestens eine sekundäre oder tertiäre Aminogruppe aufweist, ein Aminosilan der Formel (I) ist 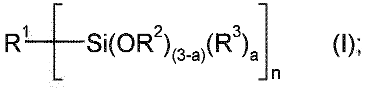
wobei R¹ für einen n-wertigen organischen Rest mit mindestens einer sekundären oder tertiären Aminogruppe steht,
R² unabhängig voneinander für Wasserstoff oder für eine Alkylgruppe mit 1 bis 4 C-Atome oder eine Acylgruppe, bevorzugt für Methyl, steht;
R³ unabhängig voneinander für H oder für eine Alkylgruppe mit 1 bis 10 C-Atome steht;
a für einen Wert von 0, 1 oder 2 steht;
und n für einen Wert von 2, 3 oder 4 steht.

3. Verwendung gemäss Anspruch 2, **dadurch gekennzeichnet, dass** das Polysilan **PSA,** welches mindestens eine sekundäre oder tertiäre Aminogruppe aufweist, ein Aminosilan der Formel (II) ist 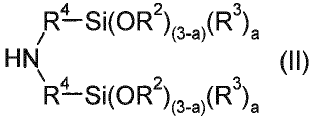 wobei R⁴ für eine lineare oder verzweigte Alkylengruppe mit 1 bis 6 C-Atomen, insbesondere für Propylen, steht.

4. Verwendung gemäss Anspruch 2, **dadurch gekennzeichnet, dass** das Polysilan **PSA,** welches mindestens eine sekundäre oder tertiäre Aminogruppe aufweist, mindestens ein Strukturelement der Formel (III) oder (III'), insbesondere der Formel (III") oder (III'"), aufweist.

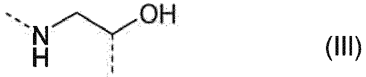

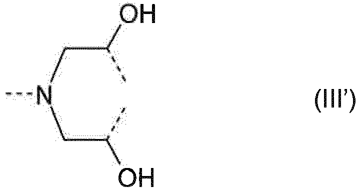

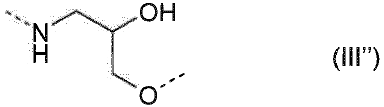

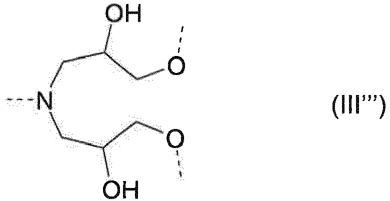

5. Verwendung gemäss Anspruch 1, **dadurch gekennzeichnet, dass** das Polysilan **PS** ein Silanequivalentgewicht von nicht mehr als 500 g/eq, insbesondere von 400 - 100 g/eq, bevorzugt von 350 bis 200 g/eq, aufweist.

6. Verwendung gemäss Anspruch 1 oder 5, **dadurch gekennzeichnet, dass** das Polysilan **PS** zwei bis vier, bevorzugt zwei, Silangruppen enthält.

7. Verwendung gemäss Anspruch 1 oder 5 oder 6, **dadurch gekennzeichnet, dass** das Aminosilan AS, welches mindestens eine sekundäre oder tertiäre Aminogruppe aufweist, die Formel (V), (VI) oder (VII) aufweist 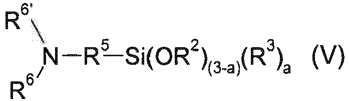 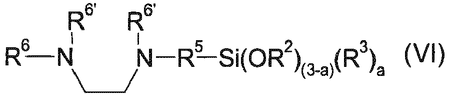 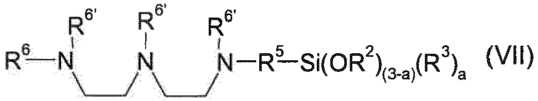
wobei R⁵ für eine lineare oder verzweigte Alkylengruppe mit 1 bis 6 C-Atomen, insbesondere für Propylen, steht;
R⁶ für eine Alkyl- oder Cycloalkylgruppe mit 1 bis 12 C-Atomen oder für eine Arylgruppe steht und
R^{6'} für ein Wasserstoffatom oder für eine Alkyl- oder Cycloalkylgruppe mit 1 bis 12 C-Atomen oder für eine Arylgruppe steht.

8. Verwendung gemäss einem der vorhergehenden Ansprüche, **dadurch gekennzeichnet, dass** das Mercaptosilan **MS** die Formel (VIII) aufweist 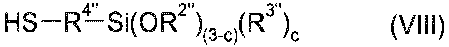
wobei R^{2"} unabhängig voneinander für Wasserstoff oder für eine Alkylgruppe mit 1 bis 4 C-Atome oder eine Acylgruppe, bevorzugt für Methyl, steht;
R^{3"} unabhängig voneinander für H oder für eine Alkylgruppe mit 1 bis 10 C-Atome steht;
R^{4"} für eine lineare oder verzweigte Alkylengruppe mit 1 bis 6 C-Atomen, insbesondere für Propylen, steht;
und c für einen Wert von 0, 1 oder 2, bevorzugt 0, steht.

9. Verwendung gemäss einem der vorhergehenden Ansprüche, **dadurch gekennzeichnet, dass** der Anteil des Mercaptosilans **MS** 0.5 - 15 Gew.-%, insbesondere 1 - 10 Gew.-%, bevorzugt 1 - 6 Gew.-%, bezogen auf das Gewicht der Haftvoranstrich-Zusammensetzung, beträgt.

10. Verwendung gemäss einem der vorhergehenden Ansprüche, **dadurch gekennzeichnet, dass** der Anteil des Polysilanes **PSA,** welches mindestens eine sekundäre oder tertiäre Aminogruppe aufweist, 0.5 - 30 Gew.-%, insbesondere 1 - 15 Gew.-%, bevorzugt 1 - 10 Gew.-%, bezogen auf das Gewicht der Haftvoranstrich-Zusammensetzung, beträgt.

11. Verwendung gemäss einem der vorhergehenden Ansprüche, **dadurch gekennzeichnet, dass** der Anteil des Polysilanes **PS** 0.5 - 15 Gew.-%, insbesondere 1 - 10 Gew.-%, bevorzugt 1 - 6 Gew.-%, bezogen auf das Gewicht der Haftvoranstrich-Zusammensetzung beträgt.

12. Verwendung gemäss Anspruch 11, **dadurch gekennzeichnet, dass** der Anteil Aminosilans **AS,** welches mindestens eine sekundäre oder tertiäre Aminogruppe aufweist, 0.5 - 25 Gew.-%, insbesondere 1 - 15 Gew.-%, bevorzugt 2 - 6 Gew.-%, bezogen auf das Gewicht der Haftvoranstrich-Zusammensetzung beträgt.

13. Verfahren zur Herstellung eines mit Haftvoranstrich-Zusammensetzungen beschichteten Substrates **S1,** welches den folgenden Schritt umfasst: Applizieren einer Haftvoranstrich-Zusammensetzung, wie sie in einem Anspruch 1 bis 12 zu dessen Verwendung, beschrieben ist, auf ein Substrat **S1,** welches die Temperatur von tiefer als 5°C, insbesondere von zwischen 0°C und -20°C, bevorzugt von zwischen -5°C und -15°C.

14. Verfahren zum Verkleben von zwei Substraten **S1** und **S2,** welches mindestens die folgenden Schritte aufweist
a) Applizieren einer Haftvoranstrich-Zusammensetzung, wie sie in einem Anspruch 1 bis 12 zu dessen Verwendung, beschrieben ist, auf ein erstes Substrat **S1,** welches die Temperatur von tiefer als 5°C, insbesondere von zwischen 0°C und -20°C, bevorzugt von zwischen -5°C und -15°C aufweist;
b) Applizieren eines Klebstoffes auf die abgelüftete nach Schritt a) applizierte Haftvoranstrich-Zusammensetzung;
c) Kontaktieren des Klebstoffes mit einem zweiten Substrat **S2;**
oder
a') Applizieren einer Haftvoranstrich-Zusammensetzung, wie sie in einem Anspruch 1 bis 12 zu dessen Verwendung, beschrieben ist, auf ein erstes Substrat **S1,** welches die Temperatur von tiefer als 5°C, insbesondere von zwischen 0°C und -20°C, bevorzugt von zwischen -5°C und -15°C aufweist;
b') Applikation eines Klebstoffes oder Dichtstoffes auf die Oberfläche eines zweiten Substrates **S2**
c') Kontaktieren des Klebstoffes mit der abgelüfteten Zusammensetzung, welche sich auf dem Substrat **S1** befindet;
oder
a") Applizieren einer Haftvoranstrich-Zusammensetzung, wie sie in einem Anspruch 1 bis 12 zu dessen Verwendung, beschrieben ist, auf ein erstes Substrat **S1** und/oder zweites Substrat **S2,** welches die Temperatur von tiefer als 5°C, insbesondere von zwischen 0°C und -20°C, bevorzugt von zwischen -5°C und -15°C aufweist;
b") Applizieren eines Klebstoffes auf das erste Substrat **S1** und zweite Substrat **S2,** auf welche zumindest eines davon nach Schritt a") eine Haftvoranstrich-Zusammensetzung appliziert worden ist;
c") Kontaktieren der applizierten Klebstoffe miteinander unter Fügen der Subtratteile zu einem Klebverbund;
oder
a'") Applizieren einer Haftvoranstrich-Zusammensetzung, wie sie in einem Anspruch 1 bis 12 zu dessen Verwendung, beschrieben ist, auf ein erstes Substrat **S1,** welches die Temperatur von tiefer als 5°C, insbesondere von zwischen 0°C und -20°C, bevorzugt von zwischen -5°C und -15°C aufweist;
b"') Ablüften der Zusammensetzung
c"') Applikation eines Klebstoffes zwischen die Oberflächen des Substrates **S1** und **S2,**
wobei das zweite Substrat **S2** aus demselben oder unterschiedlichem Material wie das Substrat **S1** besteht.

15. Verfahren zur Reparatur einer Verglasung eines Transportmittels, insbesondere eines Automobils bei einer Umgebungstemperatur von tiefer als 5°C, insbesondere von zwischen 0°C und -20°C, bevorzugt von zwischen -5°C und -15°C, umfassend die Schritte
i) Entfernen des defekten Glases, insbesondere einer defekten Scheibe;
ii) Applizieren einer Haftvoranstrich-Zusammensetzung, wie sie in einem Anspruch 1 bis 12 zu dessen Verwendung, beschrieben ist, auf ein einzuklebendes Glas, insbesondere Scheibe, und/oder auf den zu verklebenden Flansch des Transportsmittels;
iii) Applizieren eines feuchtigkeitshärtenden einkomponentigen Klebstoff, insbesondere eines feuchtigkeitshärtenden einkomponentigen Polyurethanklebstoffes, welcher eine Temperatur zwischen 10°C und 80°C, insbesondere etwa 23°C, aufweist, auf das zu verklebende Glas und/oder den zu verklebenden Flansch des Transportmittels;
iv) Fügen von Glas und Flansch über den sich dazwischen befindlichen Klebstoff.

## Claims

1. Use of an adhesive undercoat composition comprising
at least one mercaptosilane **MS** or an adduct of a mercaptosilane **MS**
and either
at least one polysilane **PSA** which has at least one secondary or tertiary amino group;
or
at least one polysilane **PS** and
at least one aminosilane **AS** which has at least one secondary or tertiary amino group;
for producing an adhesive undercoat on a substrate **S1** at a substrate temperature of less than 5°C, especially between 0°C and -20°C, preferably between -5°C and -15 °C;
wherein
an "adduct of a mercaptosilane **MS"** is understood to mean the reaction product of a mercaptosilane with an epoxide, polyepoxide or polyisocyanate, in which the mercapto group reacts with an epoxy group or isocyanate group;
"polysilane" is understood to mean a silane which has two or more silane groups in the same molecule; "silane" is understood to mean an organosilicon compound which has at least one silane group; and
a "silane group" is understood to mean a group which is bonded to an organic radical via a silicon atom and has at least one to three hydrolyzable radicals or OH.

2. Use according to Claim 1, **characterized in that** the polysilane **PSA** which has at least one secondary or tertiary amino group is an aminosilane of the formula (I) 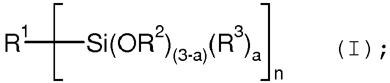
where R¹ is an n-valent organic radical having at least one secondary or tertiary amino group,
R² is independently hydrogen or an alkyl group having 1 to 4 carbon atoms or an acyl group, preferably methyl;
R³ is independently H or an alkyl group having 1 to 10 carbon atoms;
a is 0, 1 or 2;
and n is 2, 3 or 4.

3. Use according to Claim 2, **characterized in that** the polysilane **PSA** which has at least one secondary or tertiary amino group is an aminosilane of the formula (II) 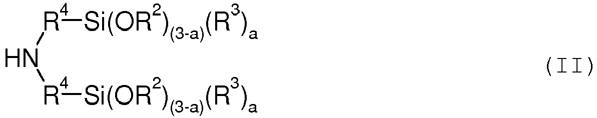 where R⁴ is a linear or branched alkylene group having 1 to 6 carbon atoms, especially propylene.

4. Use according to Claim 2, **characterized in that** the polysilane **PSA** which has at least one secondary or tertiary amino group has at least one structural element of the formula (III) or (III'), especially of the formula (III") or (III''')

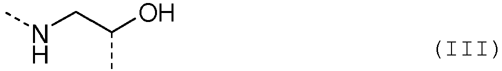

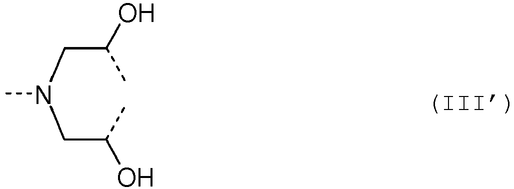

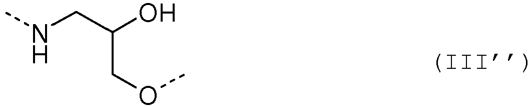

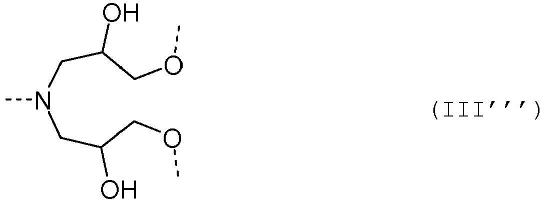

5. Use according to Claim 1, **characterized in that** the polysilane **PS** has a silane equivalent weight of not more than 500 g/eq, especially of 400-100 g/eq, preferably of 350 to 200 g/eq.

6. Use according to Claim 1 or 5, **characterized in that** the polysilane **PS** contains two to four, preferentially two, silane groups.

7. Use according to Claim 1 or 5 or 6, **characterized in that** aminosilane **AS** which has at least one secondary or tertiary amino group has the formula (V), (VI) or (VII) 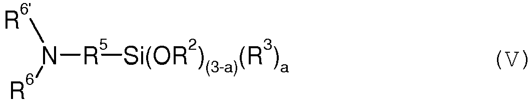 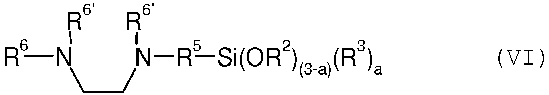 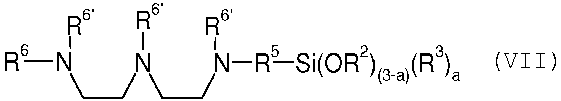
where R⁵ is a linear or branched alkylene group having 1 to 6 carbon atoms, especially propylene;
R⁶ is an alkyl or cycloalkyl group having 1 to 12 carbon atoms or an aryl group and
R^{6'} is a hydrogen atom or an alkyl or cycloalkyl group having 1 to 12 carbon atoms or an aryl group.

8. Use according to any one of the preceding claims, **characterized in that** the mercaptosilane **MS** has the formula (VIII) 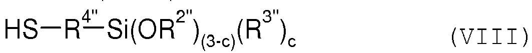
where R^{2"} is independently hydrogen or an alkyl group having 1 to 4 carbon atoms or an acyl group, preferably methyl;
R^{3"} is independently H or an alkyl group having 1 to 10 carbon atoms;
R^{4"} is a linear or branched alkylene group having 1 to 6 carbon atoms, especially propylene;
and c is 0, 1 or 2, preferably 0.

9. Use according to any one of the preceding claims, **characterized in that** the proportion of the mercaptosilane **MS** is 0.5-15% by weight, especially 1-10% by weight, preferably 1-6% by weight, based on the weight of the adhesive undercoat composition.

10. Use according to any one of the preceding claims, **characterized in that** the proportion of the polysilane **PSA** which has at least one secondary or tertiary amino group is 0.5-30% by weight, especially 1-15% by weight, preferably 1-10% by weight, based on the weight of the adhesive undercoat composition.

11. Use according to any one of the preceding claims, **characterized in that** the proportion of the polysilane **PS** is 0.5-15% by weight, especially 1-10% by weight, preferably 1-6% by weight, based on the weight of the adhesive undercoat composition.

12. Use according to Claim 11, **characterized in that** the proportion of aminosilane **AS** which has at least one secondary or tertiary amino group is 0.5-25% by weight, especially 1-15% by weight, preferably 2-6% by weight, based on the weight of the adhesive undercoat composition.

13. Process for producing a substrate **S1** coated with adhesive undercoat compositions, which comprises the following step:
applying an adhesive undercoat composition as described in Claims 1 to 12 for use thereof to a substrate **S1** which has a temperature of less than 5°C, especially of between 0°C and -20°C, preferably of between -5°C and -15°C.

14. Process for adhesive bonding two substrates **S1** and **S2,** which has at least the following steps
a) applying an adhesive undercoat composition as described in Claims 1 to 12 for use thereof to a first substrate **S1** which has a temperature of less than 5°C, especially of between 0°C and -20°C, preferably of between -5°C and -15°C;
b) applying an adhesive to the flashed-off adhesive undercoat composition applied in step a);
c) contacting the adhesive with a second substrate **S2;**
or
a') applying an adhesive undercoat composition as described in Claims 1 to 12 for use thereof to a first substrate **S1** which has a temperature of less than 5°C, especially of between 0°C and -20°C, preferably of between -5°C and -15°C;
b') applying an adhesive or sealant to the surface of a second substrate **S2**
c') contacting the adhesive with the flashed-off composition present on substrate **S1;**
or
a") applying an adhesive undercoat composition as described in Claims 1 to 12 for use thereof to a first substrate **S1** and/or second substrate **S2** which has a temperature of less than 5°C, especially of between 0°C and -20°C, preferably of between -5°C and -15°C;
b") applying an adhesive to the first substrate **S1** and second substrate **S2,** to at least one of which an adhesive undercoat composition has been applied in step a");
c") contacting the adhesives applied to one another to join the substrate parts to form an adhesive bond;
or
a"') applying an adhesive undercoat composition as described in Claims 1 to 12 for use thereof to a first substrate **S1** which has a temperature of less than 5°C, especially of between 0°C and -20°C, preferably of between -5°C and -15°C;
b"') flashing off the composition
c"') applying an adhesive between the surfaces of substrates **S1** and **S2,**
the second substrate **S2** consisting of the same material or a different material than substrate **S1.**

15. Process for repairing glazing of a means of transport, especially of an automobile, at an ambient temperature of less than 5°C, especially of between 0°C and -20°C, preferably of between -5°C and -15°C, comprising the steps of
i) removing the defective glass, especially a defective pane;
ii) applying an adhesive undercoat composition as described in Claims 1 to 12 for use thereof to a piece of glass, especially pane, to be inserted by adhesive bonding, and/or to the flange of the mode of transport to be adhesive bonded;
iii) applying a moisture-curing one-component adhesive, especially a moisture-curing one-component polyurethane adhesive, which has a temperature between 10°C and 80°C, especially about 23°C, to the piece of glass to be adhesive bonded and/or the flange of the mode of transport to be adhesive bonded;
iv) joining glass and flange via the adhesive present between them.

## Revendications

1. Utilisation d'une composition d'apprêt d'adhérence contenant
au moins un mercaptosilane **MS** ou un adduit d'un mercaptosilane **MS,** ainsi que soit
au moins un polysilane **PSA,** qui comprend au moins un groupe amino secondaire ou tertiaire ;
soit
au moins un polysilane **PS** et
au moins un aminosilane **AS,** qui comprend au moins un groupe amino secondaire ou tertiaire ;
pour la réalisation d'un apprêt d'adhérence sur un substrat **S1** à une température de substrat inférieure à 5 °C, notamment comprise entre 0 °C et -20 °C, de préférence entre -5 °C et -15 °C ;
un « adduit d'un mercaptosilane **MS** » se rapportant au produit de réaction d'un mercaptosilane avec un époxyde, un polyépoxyde ou un polyisocyanate, dans lequel le groupe mercapto réagit avec un groupe époxyde ou un groupe isocyanate ;
un « polysilane » se rapportant à un silane qui comprend deux groupes silane ou plus dans la même molécule ;
un « silane » se rapportant à un composé d'organo-silicium, qui comprend au moins un groupe silane ; et un « groupe silane » se rapportant à un groupe relié par un atome de silicium à un radical organique, qui comprend au moins un à trois radicaux hydrolysables ou OH.

2. Utilisation selon la revendication 1, **caractérisée en ce que** le polysilane **PSA,** qui comprend au moins un groupe amino secondaire ou tertiaire, est un aminosilane de formule (I) 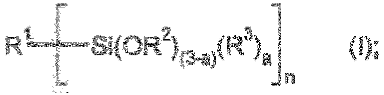
dans laquelle R¹ représente un radical organique n-valent contenant au moins un groupe amino secondaire ou tertiaire,
les R² représentent indépendamment les uns des autres l'hydrogène ou un groupe alkyle de 1 à 4 atomes C ou un groupe acyle, de préférence un méthyle ;
les R³ représentent indépendamment les uns des autres H ou un groupe alkyle de 1 à 10 atomes C ;
a représente une valeur de 0, 1 ou 2 ;
et n représente une valeur de 2, 3 ou 4.

3. Utilisation selon la revendication 2, **caractérisée en ce que** le polysilane **PSA,** qui comprend au moins un groupe amino secondaire ou tertiaire, est un aminosilane de formule (II) 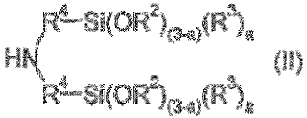 dans laquelle R⁴ représente un groupe alkylène linéaire ou ramifié de 1 à 6 atomes C, notamment un propylène.

4. Utilisation selon la revendication 2, **caractérisée en ce que** le polysilane **PSA,** qui comprend au moins un groupe amino secondaire ou tertiaire, comprend au moins un élément structural de formule (III) ou (III'), notamment de formule (III") ou (III"')

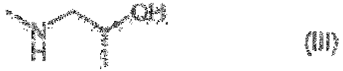

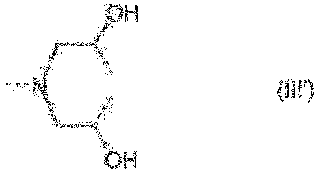

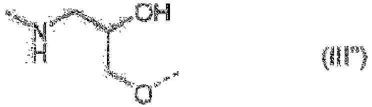

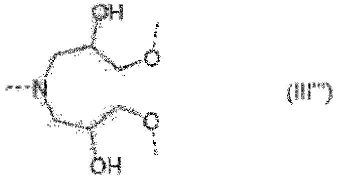

5. Utilisation selon la revendication 1, **caractérisée en ce que** le polysilane **PS** présente un poids équivalent de silane non supérieur à 500 g/éq., notamment de 400 à 100 g/éq., de préférence de 350 à 200 g/éq.

6. Utilisation selon la revendication 1 ou 5, **caractérisée en ce que** le polysilane **PS** contient deux à quatre, de préférence deux, groupes silane.

7. Utilisation selon la revendication 1 ou 5 ou 6, **caractérisée en ce que** l'aminosilane **AS,** qui comprend au moins un groupe amino secondaire ou tertiaire, présente la formule (V), (VI) ou (VII) 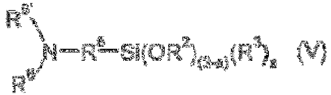 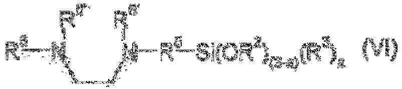 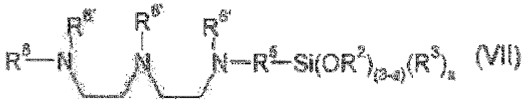
dans lesquelles R⁵ représente un groupe alkylène linéaire ou ramifié de 1 à 6 atomes C, notamment un propylène ;
R⁶ représente un groupe alkyle ou cycloalkyle de 1 à 12 atomes C, ou un groupe aryle, et
R^{6'} représente un atome d'hydrogène ou un groupe alkyle ou cycloalkyle de 1 à 12 atomes C ou un groupe aryle.

8. Utilisation selon l'une quelconque des revendications précédentes, **caractérisée en ce que** le mercaptosilane **MS** présente la formule (VIII) 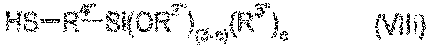
dans laquelle les R^{2"} représentent indépendamment les uns des autres l'hydrogène ou un groupe alkyle de 1 à 4 atomes C ou un groupe acyle, de préférence un méthyle ;
les R^{3"} représentent indépendamment les uns des autres H ou un groupe alkyle de 1 à 10 atomes C ;
R^{4"} représente un groupe alkylène linéaire ou ramifié de 1 à 6 atomes C, notamment un propylène ;
et c représente une valeur de 0, 1 ou 2, de préférence 0.

9. Utilisation selon l'une quelconque des revendications précédentes, **caractérisée en ce que** la proportion du mercaptosilane **MS** est de 0,5 à 15 % en poids, notamment de 1 à 10 % en poids, de préférence de 1 à 6 % en poids, par rapport au poids de la composition d'apprêt d'adhérence.

10. Utilisation selon l'une quelconque des revendications précédentes, **caractérisée en ce que** la proportion du polysilane **PSA,** qui comprend au moins un groupe amino secondaire ou tertiaire, est de 0,5 à 30 % en poids, notamment de 1 à 15 % en poids, de préférence de 1 à 10 % en poids, par rapport au poids de la composition d'apprêt d'adhérence.

11. Utilisation selon l'une quelconque des revendications précédentes, **caractérisée en ce que** la proportion du polysilane **PS** est de 0,5 à 15 % en poids, notamment de 1 à 10 % en poids, de préférence de 1 à 6 % en poids, par rapport au poids de la composition d'apprêt d'adhérence.

12. Utilisation selon la revendication 11, **caractérisée en ce que** la proportion de l'aminosilane **AS,** qui comprend au moins un groupe amino secondaire ou tertiaire, est de 0,5 à 25 % en poids, notamment de 1 à 15 % en poids, de préférence de 2 à 6 % en poids, par rapport au poids de la composition d'apprêt d'adhérence.

13. Procédé de fabrication d'un substrat **S1** revêtu avec des compositions d'apprêt d'adhérence, qui comprend l'étape suivante :
l'application d'une composition d'apprêt d'adhérence, telle que décrite dans l'une quelconque des revendications 1 à 12 pour son utilisation, sur un substrat **S1,** qui présente une température inférieure à 5 °C, notamment comprise entre 0 °C et -20 °C, de préférence entre -5 °C et -15 °C.

14. Procédé de collage de deux substrats **S1** et **S2,** qui comprend au moins les étapes suivantes :
a) l'application d'une composition d'apprêt d'adhérence, telle que décrite dans l'une quelconque des revendications 1 à 12 pour son utilisation, sur un premier substrat **S1,** qui présente une température inférieure à 5 °C, notamment comprise entre 0 °C et - 20 °C, de préférence entre -5 °C et -15 °C ;
b) l'application d'un adhésif sur la composition d'apprêt d'adhérence appliquée selon l'étape a) ventilée ;
c) la mise en contact de l'adhésif avec un deuxième substrat **S2** ;
ou
a') l'application d'une composition d'apprêt d'adhérence, telle que décrite dans l'une quelconque des revendications 1 à 12 pour son utilisation, sur un premier substrat **S1,** qui présente une température inférieure à 5 °C, notamment comprise entre 0 °C et - 20 °C, de préférence entre -5 °C et -15 °C ;
b') l'application d'un adhésif ou d'un agent d'étanchéité sur la surface d'un deuxième substrat **S2,** c') la mise en contact de l'adhésif avec la composition ventilée, qui se trouve sur le substrat **S1** ;
ou
a") l'application d'une composition d'apprêt d'adhérence, telle que décrite dans l'une quelconque des revendications 1 à 12 pour son utilisation, sur un premier substrat **S1** et/ou un deuxième substrat **S2,** qui présentent une température inférieure à 5 °C, notamment comprise entre 0 °C et -20 °C, de préférence entre -5 °C et -15 °C ;
b") l'application d'un adhésif sur le premier substrat **S1** et le deuxième substrat **S2,** sur au moins un desquels une composition d'apprêt d'adhérence a été appliquée selon l'étape a") ;
c") la mise en contact des adhésifs appliqués l'un avec l'autre avec assemblage des parties de substrat pour former un composite par adhérence ;
ou
a"') l'application d'une composition d'apprêt d'adhérence, telle que décrite dans l'une quelconque des revendications 1 à 12 pour son utilisation, sur un premier substrat **S1,** qui présente une température inférieure à 5 °C, notamment comprise entre 0 °C et - 20 °C, de préférence entre -5 °C et -15 °C ;
b"') la ventilation de la composition,
c"') l'application d'un adhésif entre les surfaces des substrats **S1** et **S2,**
le deuxième substrat **S2** étant constitué par un matériau identique ou différent au substrat **S1.**

15. Procédé de réparation d'un vitrage d'un moyen de transport, notamment d'une automobile, à une température ambiante inférieure à 5 °C, notamment comprise entre 0 °C et -20 °C, de préférence entre -5 °C et -15 °C, comprenant les étapes suivantes :
i) l'élimination du verre défectueux, notamment d'une vitre défectueuse ;
ii) l'application d'une composition d'apprêt d'adhérence, telle que décrite dans l'une quelconque des revendications 1 à 12 pour son utilisation, sur un verre à coller, notamment une vitre, et/ou sur le flanc à coller du moyen de transport ;
iii) l'application d'un adhésif monocomposant durcissant à l'humidité, notamment d'un adhésif monocomposant durcissant à l'humidité à base de polyuréthane, qui présente une température comprise entre 10 °C et 80 °C, notamment d'environ 23 °C, sur le verre à coller et/ou le flanc à coller du moyen de transport ;
iv) l'assemblage du verre et du flanc par le biais de l'adhésif se trouvant entre eux.
